# EUROPEAN PATENT APPLICATION

(11) **EP 2 023 625 A1**
(43) Date of publication of application: **11.02.2009**
(21) Application number: 08013257.4
(22) Date of filing: 23.07.2008
(51) Int. Cl.: H04N 5/64, G06F 1/20

(54) **Personal computer-integrated television having effective heat-dissipation structure**

(30) Priority: 24.07.2007 KR 20070073911
(71) Applicant: IT SALUX Co. Ltd., Guro-gu Seoul (KR)
(72) Inventor: Kim, Joon-Young, Incheon-City 403-739 (KR); Gang, Bong-Oh, Incheon-City 407-061 (KR)
(74) Representative: Schoppe, Fritz

(57) **Abstract**

A heat dissipation structure for PC-integrated TV is provided. The PC-integrated TV includes base frame, PC unit, TV unit, SMPS unit, PC-TV interface, and user interface. The PC unit includes PC main board including CPU and system chipset. The TV unit has TV main board including dual-core chip in which TV signal processor and controller are implemented by dual-core, and audio amplifier chip. First heat dissipation plate and cooler coupled to the first heat dissipation plate are disposed on the central processing unit mounted on the PC main board such that heat generated in the central processing unit is transferred to the first heat dissipation plate, second heat dissipation plate is disposed on the system chipset mounted on the PC main board such that heat generated in the system chipset is transferred to the second heat dissipation plate, third heat dissipation plate is disposed on the dual-core chip such that heat generated in the TV signal processor and the controller is transferred to the third heat dissipation plate, and fourth heat dissipation plate is mounted on the audio amplifier chip in vertical direction of the TV main board and has larger area than the audio amplifier chip. Heat generated in the PC main board and the TV main board can be effectively dissipated.

## Description

### FIELD OF THE INVENTION

The present invention relates to a heat dissipation structure of a personal computer (PC)-integrated television (TV) in which the PC is embedded in the TV receiver, and more particularly, to a heat dissipation plate structure for efficient heat dissipation in the PC-integrated TV.

### BACKGROUND OF THE INVENTION

While a television (TV) has conventionally functioned as a center of home entertainment, the recent advent of multimedia technology is paving the way for a personal computer (PC) to take over as the central element of home entertainment.

Enhanced computing power and integrated signal processing capability resulting from multimedia data digitalization have made the PC more important for home entertainment. Enhanced computing power of a central processing unit and integrated signal processing capability resulting from multimedia data digitalization have increased the PC's processing capability. More specifically, the rise of the PC as a center of home entertainment may be attributed to the introduction of a motion-picture compression/decompression scheme represented by motion picture expert group (MPEG), and an audio compression/decompression scheme such as MPEG audio layer-3 (MP3), and the integration of high-performance hardware with high-definition reproduction such as video and audio controllers.

The simplest example of utilizing a PC as a home entertainment center includes a PC connected to a TV, in which a video output of the PC is received at an external input terminal of the TV and used. In this case, an output of a video controller mounted in the PC is displayed on a TV screen, as a TV is used as a monitor for the PC. An audio output of the PC is connected to AV speakers via a separate sound processing amplifier, or to active speakers with an amplifier.

Another example may include a PC-integrated TV. The PC-integrated TV is an enhanced version of the device in which the video output of the PC is input to an external input of the TV, and can be controlled in an integrated manner. The PC-integrated TV allows a user to conveniently view PC-reproduced motion picture on the TV screen and to utilize a web-browsing function of the PC.

The PC-integrated TV is implemented by integrating a TV main board having TV processing chips and a PC main board having PC processing chips.

A system chipset including a video controller and an audio controller, and an integrated circuit as a central processing unit (CPU) may be mounted on the PC main board. A dual-core chip having both an integrated circuit having a TV signal processing function and a controller, and an audio amplifier chip, may be mounted on the TV main board.

Electronic parts such as transistors are installed on the TV main board and perform a switching or amplifying function. In this case, a great amount of heat is generated in the electronic parts. When the TV operates for a long time, heat emitted from the electronic parts is transferred to the circuit board and to other electronic parts, causing them to rise to a considerable temperature. The emitted heat may melt soldered portions of parts on the circuit board and affect connections between connection pins of the electronic parts and the circuit board, thereby causing defects, such as abnormal connections.

Heat is generated even in several electronic elements mounted on the PC main board. In particular, a great amount of heat is generated in a CPU which is responsible for various computations and controls. The heat generated in the CPU may cause it to overheat, reducing its processing speed and lifespan, and even disabling it.

### SUMMARY OF THE INVENTION

In the case of a PC-integrated TV, a great amount of heat is generated and built up in a system chipset having a video controller and an audio controller and a CPU for the PC, which are disposed on a PC main board, and in a dual-core chip having both a TV signal processing circuit and controller and an audio amplifier chip, which are disposed on a TV main board. Thus, there is need for a heat dissipation structure capable of effectively dissipating the heat.

The present invention provides a PC-integrated TV having a heat dissipation structure capable of effectively dissipating heat emitted from a PC main board and a TV main board.

According to an aspect of the present invention, a PC-integrated television (TV) includes: a base frame; a PC unit disposed on the base frame and including a PC main board having a central processing unit and a system chipset, and an auxiliary memory; a TV unit disposed on the base frame and having a TV main board including a dual-core chip having a TV signal processor configured to process a TV signal and a controller configured to perform internal and external control, and an audio amplifier chip configured to amplify and output an audio signal; a switching mode power supply (SMPS) unit disposed on the base frame for supplying a supply voltage to both the TV unit and the PC unit; a PC-TV interface configured to interface between the TV unit and the PC unit; and a user interface configured to deliver user input to the controller of the TV unit, wherein a first heat dissipation plate and a cooler coupled to the first heat dissipation plate are disposed on the central processing unit mounted on the PC main board such that heat generated in the central processing unit is transferred to the first heat dissipation plate, a second heat dissipation plate is disposed on the system chipset mounted on the PC main board such that heat generated in the system chipset is transferred to the second heat dissipation plate, and a third heat dissipation plate is disposed on the dual-core chip such that heat generated in the TV signal processor and the controller is transferred to the third heat dissipation plate, and wherein the audio amplifier chip is vertically mounted on the TV main board, and a fourth heat dissipation plate having a larger area than the audio amplifier chip is mounted on the audio amplifier chip in a vertical direction of the TV main board. The cooler may be an intake cooler. The fourth heat dissipation plate may have a three to four times larger area than the audio amplifier chip. The PC-integrated TV may further comprise a shield case configured to shield the PC main board, the TV main board, and an SMPS power module board on the base frame from the exterior, and form an inner space.

According to the PC-integrated TV of the present invention, the dual-core chip can be effectively cooled by disposing the first heat dissipation plate and the cooler on the CPU mounted on the PC main board, disposing the second heat dissipation plate on the system chipset mounted on the PC main board to effectively dissipate heat generated in the system chipset which is most vulnerable to heat, and disposing the third heat dissipation plate on the dual-core chip mounted on the TV main board so that heat generated in the dual-core chip is transferred to the third heat dissipation plate. In addition, the audio amplifier chip can be effectively cooled by mounting the fourth heat dissipation plate having an area three to four times larger than the audio amplifier chip on the audio amplifier chip vertically mounted on the TV main board, to transfer heat generated in the audio amplifier chip to the fourth heat dissipation plate.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a block diagram illustrating a PC-integrated TV of the present invention;
FIG. 2 illustrates a heat dissipation structure for a PC main board and a TV main board on a base frame located at a rear side of a display panel of a PC-integrated TV according to an exemplary embodiment of the present invention;
FIG. 3 illustrates a heat dissipation structure for a shield case for covering the base frame located at the rear side of the display panel of the PC-integrated TV according to an exemplary embodiment of the present invention; and
FIG. 4 conceptually illustrates, on the corresponding base frame including the PC main board and the TV main board, the heat dissipation structure for the shield case for covering the base frame of the PC-integrated TV according to an exemplary embodiment of the present invention.

### DETAILED DESCRIPTION OF EXEMPLARY EMBODIMENTS

The present invention now will be described more fully hereinafter with reference to the accompanying figures, in which exemplary embodiments of the invention are shown. This invention may, however, be embodied in many alternate forms and should not be construed as limited to the exemplary embodiments set forth herein. Like reference numerals refer to like elements throughout the drawings.

Although the terms "first", "second", etc. may be used herein to distinguish one element from another element, these elements should not be construed as limited by these terms. For example, a "first" element could be termed a "second" element and vice versa without departing from the teachings of the present invention. As used herein, the term "and/or" includes any and all combinations of one or more of the associated listed items.

It will be understood that when an element is referred to as being "coupled to" or "connected to" another element, it can be directly coupled or connected to the other element, or intervening elements may be present. In contrast, when an element is referred to as being "directly coupled to" or "directly connected to" another element or layer, there are no intervening elements present.

The terminology used herein is chosen to describe particular exemplary embodiments only and is not intended to limit the scope of the invention. Herein, although articles like "a", "an" and "the" indicate that an element is singular, it may in fact be plural, unless the context clearly indicates otherwise. It will be further understood that the terms "comprises" and/or "comprising," when used in this specification, specify the presence of stated features, numbers, steps, operations, elements, and/or components, but do not preclude the presence or addition of one or more other features, numbers, steps, operations, elements, components, and/or groups thereof.

Unless otherwise defined, all terms (including technical and scientific terms) used herein have the same meanings as commonly understood by one of ordinary skill in the art to which this invention pertains. It will be further understood that terms defmed in common dictionaries should be interpreted within the context of the relevant art and not in an idealized or overly formal sense unless expressly so defined herein.

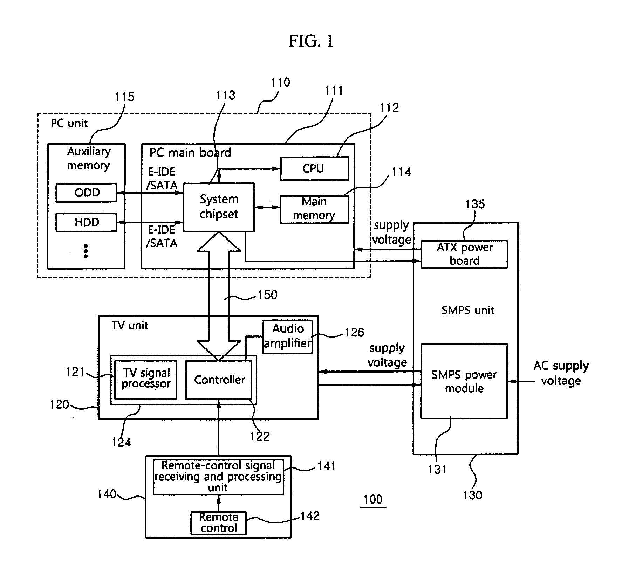

FIG. 1 is a block diagram of a PC-integrated TV of the present invention.

Referring to FIG. 1, the PC-integrated TV 100 may include, as primary components, a PC unit 110, a TV unit 120, an SMPS unit 130, a user interface 140, and a PC-TV interface 150.

The PC unit 110 may include a CPU 112, a system chipset 113, and a main memory 114 such as a dynamic random access memory (D-RAM), which are mounted on a PC main board 111, and an auxiliary memory 115 such as a hard disc drive (HDD) or a flash memory.

Although not shown in FIG. 1, the PC unit 110 includes a video controller for generating and outputting a video signal, and an audio controller for generating and outputting a 2- or multi-channel analog or digital audio signal, which are generally mounted on the PC main board 111.

The PC main board 111 may be one of various main boards, including an Advanced Technology Extension (ATX) board that is generally used, and a mini-ATX board that is suitable for small-sized products.

When the PC unit 110 is an IBM PC series computer, the CPU 112 mounted in the PC unit 110 may be an INTEL x86 series CPU or a CPU compatible with the x86 series CPU. The system chipset 113 is a component for controlling the entire PC unit 110 using hardware, and serves as core elements of the PC unit 110, such as a main memory controller, an extension slot interface, a disc interface, a keyboard/mouse interface, and a universal serial bus (USB) interface. The system chipset 113 generally includes two chips (a North Bridge chip and a South Bridge chip), or three chips (a Memory Control Hub (MCH), an I/O Control Hub (ICH), and a FirmWare Hub (FWH)), which have different functions. The system chipset 113 may include other components depending on its type. In recent years, a system processor chip in an all-in-one form in which the North Bridge chip and the South Bridge chip are integrated into a single body while the video controller and the audio controller are also integrated in one chip is widely used for small-sized, lightweight systems. An example of the system processor chip is Cx700/Cx700m available from VIA. Accordingly, when the integrated system processor is used, the video controller and the audio controller are embedded in the system chipset 113. In FIG. 1, the video controller and the audio controller are shown as being integrated into the system chipset 113. For another type of the system chipset 113, the video controller and the audio controller may be included in the PC main board 111.

The main memory 114 may generally be a D-RAM. Recently, a double data rate-SDRAM (DDR-SDRAM) is used as the main memory 114.

The auxiliary memory 115 may be a hard disc drive or a flash memory, and is connected to the system chipset 113 via a parallel interface such as extended-IDE (E-IDE) or a serial interface such as serial AT attachment (SATA). Generally, the auxiliary memory 115 may be a hard disc drive. Advantageously, the auxiliary memory 115 may be a flash memory having characteristics of impact resistance, reduced power consumption, and reduced noise. The auxiliary memory 115 may include an optical disc drive (ODD), such as a digital versatile disc-read only memory (DVD-ROM), a digital versatile disc ± rewritable (DVD ±RW), a blue-ray, a high-density digital versatile disc (HD-DVD), a compact disc-read only memory (CD-ROM), and a compact disc-rewritable (CD-RW), which may also be connected to the system chipset 113 via the interface, such as E-IDE or SATA.

Referring back to FIG. 1, the TV unit 120 is disposed on a single TV main board and includes a dual-core chip 124 and an audio amplifier 126. The dual-core chip 124 may include a TV signal processor 121 and a controller 122.

The TV signal processor 121 processes TV video and audio signals. The TV signal processor 121 receives a video signal corresponding to a TV signal format (e.g., National Television System Committee (NTSC), Systeme Electronique Couleur Avec Memoire (SECAM), or Phase Alternating Line (PAL)), and outputs it to a display panel.

The controller 122 processes interfacing with the PC unit 110 and internal control signals of the TV unit 120. A recent trend of the dual-core chip 124 is a one-chip solution in a dual-core form in which the TV signal processor 121 for processing the TV signal, and the controller 122 having predetermined programmed firmware and capable of processing reception of a remote control signal and generation of on-screen display (OSD) on a TV screen, are included in a one-chip.

An example of the one-chip solution is a VCT-Pro chip available from Swiss Micronas, which has the TV signal processor 121 for processing the TV signal and an 8-bit microcomputer (compatible with 8051) as the controller 122. However, where the TV unit 120 is not implemented using a dual-core chip having the TV signal processor 121 and the controller 122 as described above, a microcomputer as the controller 122 may be separate from the TV signal processor 121.

In FIG. 1, the TV signal processor 121 and the controller 122 are shown as being implemented by the dual-core chip 124.

The switching mode power supply (SMPS) unit 130 supplies a supply voltage to the PC unit 110 and the TV unit 120. The SMPS unit 130 may include an SMPS power module 131 and an ATX power board 135.

The SMPS is suitable for small-sized and lightweight electronic products because of its small size and high efficiency, and is widely used as a main power supply. In the SMPS unit 130, the SMPS power module 131 converts an alternating current (AC) voltage of 110V or 220V into a direct current (DC) voltage ranging from 3.3 to 48V, and supplies the DC voltage. In a stand-by state, the SMPS unit 130 supplies a low voltage (e.g., 5V) to the PC unit 110 and the TV unit 120, such that the controller 122 of the TV unit is energized.

When the PC main board 111 is an ATX type main board, the ATX power board 135 supplies a supply voltage to the PC main board 111. That is, in the PC-integrated TV 100 according to the present invention, the PC unit 110 and the TV unit 120 are energized by the common SMPS power module 131. Accordingly, the SMPS unit 130 further includes the ATX power board 135 for converting an output voltage of the SMPS power module 131 depending on the PC unit and supplying the resultant voltage to the PC main board 111, instead of employing a PC-dedicated ATX SMPS power supply as in a typical PC.

In the PC-integrated TV 100 according to the present invention, the single SMPS power module 131 is used. However, the ATX power board 135 which generates power required for the PC unit using power generated from the single SMPS power module common to the TV unit may be separately provided to configure the SMPS unit 130. Therefore, it is possible to reduce heat, noise, electrical noise occurring when separate SMPS power modules are used in the PC unit and the TV unit, respectively.

Referring back to FIG. 1, the user interface 140 is a component for receiving a user input to the PC unit 110 and the TV unit 120. In the PC-integrated TV 100, both the PC unit 110 and the TV unit 120 can be controlled using the single user interface. The user interface 140 may be one of various interface devices. As the PC-integrated TV according to the present invention is mainly used for home entertainment, the user interface 140 may be in a remote control form.

For example, where the PC-integrated TV is intended for use as a center of home entertainment in a living room, the PC-integrated TV may be controlled using a remote control like a conventional TV receiver.

Accordingly, the user interface 140 may include a remote-control signal receiving and processing unit 141 and a remote control 142.

Referring back to FIG. 1, the PC-TV interface 150 may be used to connect the PC unit 110 with the TV unit 120.

The PC-TV interface 150 may be one of various interfaces. The PC-TV interface 150 may depend on system implementations.

For example, the PC-TV interface 150 of the PC-integrated TV 100 according to the present invention may be a general-purpose 40-pin connector. The PC-TV interface 150 may be configured to collectively send a video signal, an audio signal, and control signals from the PC unit 110 to the TV unit 120, and control signals from the TV unit 120 to the PC unit 110.

That is, the PC-TV interface 150 sends a video signal from the video controller, which may be included in the PC unit 110, and an audio signal including a sound signal from the audio controller, which may also be included in the PC unit 110, to the TV unit 120, and sends control signals from the controller 122 in the TV unit 120 to the PC unit 110. The control signals from the controller 122 in the TV unit 120 may be obtained by the controller 122 in the TV unit 120 converting user inputs via the remote control 142 and the remote control signal receiving and processing unit 141 in the user interface 140, and may correspond to the PC unit 110.

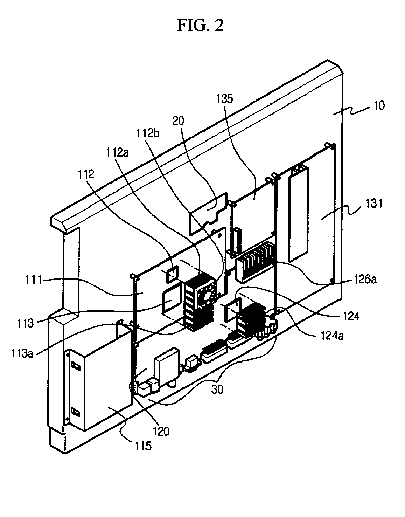

A heat dissipation structure of the PC-integrated TV according to an exemplary embodiment of the present invention will now be described with reference to FIGS. 2 to 4.

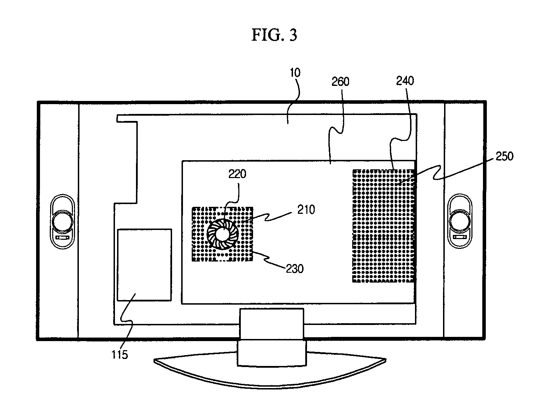

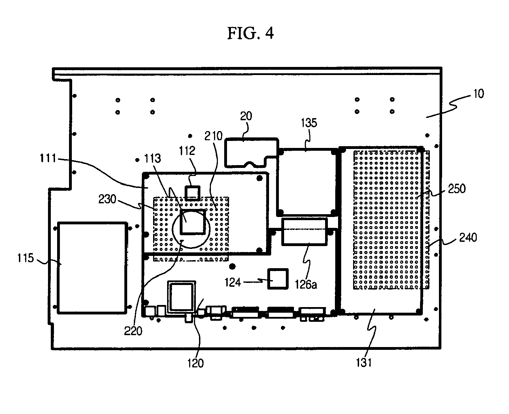

FIG. 2 illustrates a heat dissipation structure for a PC main board and a TV main board on a base frame located at a rear side of a display panel of the PC-integrated TV according to an exemplary embodiment of the present invention, and FIG. 3 illustrates a heat dissipation structure for a shield case for covering the base frame located at the rear side of the display panel of the PC-integrated TV according to an exemplary embodiment of the present invention. FIG. 4 conceptually illustrates, on the corresponding base frame including the PC main board and the TV main board, the heat dissipation structure for the shield case for covering the base frame of the PC-integrated TV according to an exemplary embodiment of the present invention.

Referring to FIGS. 2 to 4, the auxiliary memory 115, the PC main board 111, the TV main board 120, the ATX power board 135, an SMPS power module board 131, and the like are disposed on a base frame 10 of the PC-integrated TV. The base frame 10 has a wiring insertion hole 120 for insertion of necessary cables, including a power cable. External terminals 30 of FIG. 2 include a LAN terminal, a USB terminal, a terminal connected to a tuner, a PC audio input terminal, a PC video input terminal, a TV audio input terminal, a TV video input terminal, a TV component, a composite, and audio input terminals, in order from left to right.

The system chipset 113 including the video controller and the audio controller, and an integrated circuit as the central processing unit (CPU) 112 are mounted on the PC main board 111

The dual-core chip 124 having both the TV signal processor 121 and the controller 122, and the audio amplifier chip 126 are mounted on the TV main board 120.

The PC main board 111, the TV main board 120, the ATX power board 135, and the SMPS power module board 131 on the base frame 10 are shielded from the exterior by the shield case 260, which forms an inner space.

The shield case 260 includes a cooler 220 and a plurality of heat dissipation holes 210. For example, the cooler 220 may be an intake fan.

A heat dissipation plate 112a, such as a heat sink, is mounted on the integrated circuit serving as the CPU 112 on the PC main board 111, and a cooler 112b is mounted on the heat dissipation plate 112a. Heat generated in the integrated circuit serving as the CPU 112 is transferred to the heat dissipation plate 112a. The cooler 112b, the intake fan, is energized by the SMPS unit 130 and rotates to provide external air to the interior and cool the heat dissipation plate 112a.

The above-described heat dissipation structure for the integrated circuit of the CPU 112 initially exhibits a heat dissipation effect to some extent. However, when the heat dissipation plate 112a is overheated due to long-term operation of the CPU 112, the heat is transferred to parts of the cooler 112b on the heat dissipation plate 112a to deteriorate functions of the parts, inevitably causing severe noise and vibration. The noise and the vibration are amplified in the shielded inner space on the base frame 10 of the PC-integrated TV, affecting other parts in the inner space and deteriorating functions of the PC-integrated TV. The vibration of the rotating cooling fan may affect other parts, and the noise from the rotating cooling fan may affect a user's work environment.

A heat dissipation plate 113a such as a heat sink is mounted on the system chipset 113 so that heat generated in the system chipset 113 is transferred to the heat dissipation plate 113a, cooling the system chipset 113.

In an exemplary embodiment of the present invention, the separate heat dissipation plate 113a is installed because the system chipset 113 on the PC main board 111 is most susceptible to heat. As shown in FIG. 4, the cooler 220 and the heat dissipation holes 210 are installed in the shield case 260 over the system chipset 113, for air intake through the intake cooler for the CPU 112 and heat emission through the heat dissipation plate 113a for the system chipset 113. The cooler 220 may be an intake cooler.

The cooler 220 for the shield case 260 is located away from the cooler 112b for the CPU 112 in a horizontal direction of the base frame 10, so that it does not overlap with the cooler 112b for the CPU 112 and is disposed to cover a considerable portion of the system chipset 113, i.e., a predetermined percentage (%) of a whole area of the system chipset 113 from above the system chipset 113. For example, the predetermined percentage (%) may be about 1/3 to about 1/2 of the whole area of the system chipset 113. Alternatively, the predetermined percentage (%) may be about 1/3 to about 60 % of the whole area of the system chipset 113. Since the cooler 112b for the CPU 112 has a predetermined height, the cooler 220 for the shield case 260 is preferably disposed not to overlap with the cooler 112b for the CPU 112, as shown in FIG. 4.

The plurality of heat dissipation holes 210 of the shield case 260 are formed in a region 230 having a predetermined size to fully cover the system chipset 113 from above the system chipset 113.

The heat dissipation holes 210 of the shield case 260 enable air intake through the intake cooler 112b for the CPU 112 and can reduce noise and vibration from the cooler 112b for the CPU 112. Thus, the heat dissipation holes 210 can prevent the noise and the vibration from being amplified in the shielded inner space on the base frame 10 of the PC-integrated TV and affecting other parts in the inner space, not to deteriorate the function of the PC-integrated TV.

A great amount of heat may be generated from the TV signal processor 121 and the controller 122 that are mounted in the dual-core chip 124 in the present invention. To effectively dissipate the heat, a separate heat dissipation plate 124a is provided to the dual-core chip 124, as shown in FIG. 2. Specifically, the heat dissipation plate 124a such as a heat sink is mounted on the dual-core chip 124 mounted on the TV main board 120. The heat generated in the dual-core chip 124 is transferred to the heat dissipation plate 124a to effectively cool the dual-core chip 124. The heat dissipation plate 124a may be made of aluminum.

The audio amplifier chip 126 is vertically mounted on the TV main board 120 and amplifies an audio signal, generating a great amount of heat above 100°C.

In an exemplary embodiment of the present invention, a heat dissipation plate 126a, such as a heat sink, having an area 3 to 4 times larger than the audio amplifier chip 126 is mounted on the audio amplifier chip 126, which is vertically mounted on the TV main board 120, in a vertical direction of the TV main board 120. A typical audio amplifier chip employs a heat dissipation plate having a similar size to maintain a temperature of 50 to 80 °C. On the other hand, according to the present invention, in an experiment in which an audio amplifier chip capable of withstanding a maximum of 125 °C, which is almost 2 times hotter than a typical audio amplifier chip, is used, a heat dissipation plate having an area twice that of the audio amplifier chip 126 exhibits an insufficient cooling effect to maintain 125°C or less, while a heat dissipation plate having an area three or more times that of the audio amplifier chip 126 exhibits a desired cooling effect to maintain 125 °C or less. Accordingly, use of the heat dissipation plate having an area about 3 to 4 times larger than the audio amplifier chip 126 is efficient in terms of manufacturing cost and heat dissipation effect. The heat generated in the audio amplifier chip 126 is transferred to the large heat dissipation plate 126a, thereby effectively cooling the audio amplifier chip 126.

It will be apparent to those skilled in the art that various modifications and variations can be made in the present invention without departing from the spirit or scope of the invention. Thus, it is intended that the present invention covers the modifications and variations of this invention provided they come within the scope of the appended claims and their equivalents.

## Claims

1. A personal computer (PC)-integrated television (TV), comprising:
a base frame;
a PC unit disposed on the base frame and including a PC main board having a central processing unit and a system chipset, and an auxiliary memory;
a TV unit disposed on the base frame and having a TV main board including a dual-core chip having a TV signal processor configured to process a TV signal and a controller configured to perform internal and external control, and an audio amplifier chip configured to amplify and output an audio signal;
a switching mode power supply (SMPS) unit disposed on the base frame for supplying a supply voltage to both the TV unit and the PC unit;
a PC-TV interface configured to interface between the TV unit and the PC unit; and
a user interface configured to deliver user input to the controller of the TV unit,
wherein a first heat dissipation plate and a cooler coupled to the first heat dissipation plate are disposed on the central processing unit mounted on the PC main board such that heat generated in the central processing unit is transferred to the first heat dissipation plate,
a second heat dissipation plate is disposed on the system chipset mounted on the PC main board such that heat generated in the system chipset is transferred to the second heat dissipation plate, and
a third heat dissipation plate is disposed on the dual-core chip such that heat generated in the TV signal processor and the controller is transferred to the third heat dissipation plate, and
wherein the audio amplifier chip is vertically mounted on the TV main board, and a fourth heat dissipation plate having a larger area than the audio amplifier chip is mounted on the audio amplifier chip in a vertical direction of the TV main board.

2. The PC-integrated TV of claim 1, wherein the cooler is an intake cooler.

3. The PC-integrated TV of claim 1, wherein the fourth heat dissipation plate has a three to four times larger area than the audio amplifier chip.

4. The PC-integrated TV of claim 1, further comprising a shield case configured to shield the PC main board, the TV main board, and an SMPS power module board on the base frame from the exterior, and form an inner space.
